Europäisches Patentamt

European Patent Office

Office européen des brevets

(11) Veröffentlichungsnummer: **0 284 718 B1**

# (12) EUROPÄISCHE PATENTSCHRIFT

(45) Veröffentlichungstag der Patentschrift: **06.05.92**

(21) Anmeldenummer: **88100980.7**

(22) Anmeldetag: **23.01.88**

(51) Int. Cl.⁵: **B60T 8/88**

---

(54) **Blockiergeschützte hydraulische Bremsanlage für Kraftfahrzeuge.**

---

(30) Priorität: **05.09.87 DE 3729787**
**01.04.87 DE 3710886**

(43) Veröffentlichungstag der Anmeldung:
**05.10.88 Patentblatt 88/40**

(45) Bekanntmachung des Hinweises auf die
Patenterteilung:
**06.05.92 Patentblatt 92/19**

(84) Benannte Vertragsstaaten:
**DE FR GB IT**

(56) Entgegenhaltungen:
**EP-A- 0 147 671**
**DE-A- 3 418 042**
**DE-A- 3 511 535**
**US-A- 4 672 547**

(73) Patentinhaber: **ALFRED TEVES GMBH**
**Guerickestrasse 7**
**W-6000 Frankfurt/Main 90(DE)**

(72) Erfinder: **Mattusch, Franz Josef**
**Schneidhainer Strasse 10**
**W-6380 Bad Homburg v.d.H.(DE)**

(74) Vertreter: **Grau, Ulf**
**c/o ALFRED TEVES GMBH Guerickestrasse 7**
**W-6000 Frankfurt (M) 90(DE)**

## Beschreibung

Blockiergeschützte hydraulische Bremsanlage für ein Kraftfahrzeug mit einem Hauptbremszylinder, an dem über ein oder mehrere Bremsleitungen Radbremszylinder angeschlossen sind, mit einem, von einer Druckmittelquelle gespeisten pedalbetätigten Kraftverstärker, der dem Hauptbremszylinder vorgeschaltet ist, und der einen Verstärkerkolben aufweist, dessen eine Stirnseite einen Rückstellraum und dessen andere Stirnseite einen Verstärkerraum begrenzt, wobei der Rückstellraum über ein normalerweise geschlossenes Umschaltventil SG an den Verstärkerraum und über ein oder mehreren parallel geschalteten, normalerweise offenen Umschaltventilen SO an einen drucklosen Ausgleichsbehälter angeschlossen ist.

Es ist bereits eine Bremsanlage dieser Art bekannt, mit der der Bremsdruck zur Regelung des Schlupfes im Zeit-Multiplexverfahren gesteuert werden kann (DE-OS 33 17 629). Hierzu sind in den Druckmittelleitungen, mit denen die Radbremsen einzeln und/oder paarweise an den Bremsdruckgeber angeschlossen sind, elektromagnetisch betätigbare Mehrwegeventile eingefügt, mit denen der Druckmitteldurchfluß freigegeben oder gesperrt werden kann. Außerdem läßt sich mit Hilfe von Steuerventilen eine der Pedalkraft entgegengerichtete Fremdkraft erzeugen, mit der zur Schlupfregelung die Kraft auf die Kolben im Hauptbremszylinder und damit der im Hauptbremszylinder erzeugte Bremsdruck reduziert werden kann. Laufen alle Räder stabil, sind alle Radventile, das sind die zwischen dem Bremsdruckgeber und den Radbremsen eingefügten Ventile, auf Durchlaß geschaltet und damit an den Hauptbremszylinder angeschlossen. Zeigt ein Rad Blockierneigung, werden kurzzeitig die zu allen anderen Rädern führenden Radventile auf Sperren umgeschaltet, so daß nur noch der Druckmittelkreis des blockiergefährdeten Rades an den Hauptbremszylinder angeschlossen ist. Nun wird eine Fremdkraft aufgebaut, die den (hilfskraftunterstützen) Bremspedaldruck teilweise oder vollständig kompensiert, wodurch der Bremsdruck an dem allein angeschlossenen, blockiergefährdeten Rad reduziert wird; in den anderen Rädern bleibt in dieser Phase der Druck konstant. Nach dem Druckabbau auf das gewünschte Druckniveau wird durch Ventilumschaltung der reduzierte Druck an diesem zuerst instabil gewordenen Rad konstant gehalten. Nach dem Abbau der Gegenkraft und erneutem Druckaufbau im Hauptbremszylinder kann nun der Bremsdruckaufbau in den anderen Radbremsen fortgesetzt werden. Nacheinander läßt sich auf diese Weise der Bremsdruck an jedem Rad auf den gewünschten, von der zugehörigen Elektronik errechneten Wert einstellen.

Die der Pedalkraft entgegengerichtete Fremdkraft kann wie folgt erzeugt werden. Der Verstärkerkolben begrenzt einen Rückstellraum, der bei Bremsbetätigung verkleinert wird. Dieser Rückstellraum ist, solange keine Bremsschlupfregelung erfolgt, über offene Umschaltventile an den drucklosen Ausgleichsbehälter angeschlossen. Das in dem Rückstellraum enthaltene Volumen kann somit ohne Kraftaufwand in den Ausgleichsbehälter gefördert werden. Wenn eine Rückstellung des Verstärkerkolbens wegen einer Bremsschlupfregelung notwendig wird, so wird der Rückstellraum durch Schalten des normalerweise geschlossenen Umschaltventils mit unter Druck stehendem Druckmittel versorgt. Dazu stehen zwei Alternativen zur Verfügung. Zum einen kann der Rückstellraum unmittelbar an die Druckmittelquelle angeschlossen sein und zum anderen an den Verstärkerraum des Bremskraftverstärkers. Im zweiten Fall ist der Druck des Druckmittels der Fußkraft angepaßt, so daß die Pedalrückstellung nicht ruckartig wie im ersten Fall erfolgt. Auf den zweiten Fall bezieht sich die Erfindung.

Diese Anordnung enthält aber ein kritisches Moment. Wenn nämlich die Umschaltventile, die die Verbindung zum Ausgleichsbehälter herstellen, nach einem Rückstellvorgang nicht wieder in ihre Offenstellung schaltbar sind, weil z.B. ein Ventilteil klemmt, dann ist der Rückstellraum hydraulisch gesperrt, was zur Folge hat, daß der Verstärkerkolben nicht mehr bewegbar ist: Es kann keine Bremswirkung mehr ausgeübt werden kann.

Um das Gefährdungspotential zu verringern, wurde schon vorgeschlagen, mehrere Umschaltventile parallel zu schalten, so daß mit großer Wahrscheinlichkeit davon ausgegangen werden kann, daß zumindestens ein Umschaltventil wieder öffnet und so die Verbindung zum Ausgleichsbehälter hergestellt ist.

Das System ist also redundant ausgelegt. Nun kann es aber vorkommen, daß eines der Ventile klemmt, so daß tatsächlich kein redundantes System mehr vorliegt. Dieser Fehler kann aber nicht ohne weiteres erkannt werden, da das noch intakte Ventil die volle Funktionsbereitschaft garantiert. Mit den bisher bekannten Mitteln ist es aber nicht möglich, festzustellen, ob eines der Ventile ausgefallen ist und somit kein redundantes System mehr vorliegt. Wenn dann noch das zweite Ventil ausfällt, so geschieht dies ohne Vorwarnung, und der Fahrer ist plötzlich mit einem nicht bremsfähigen Fahrzeug konfrontiert.

Die Erfindung beruht daher auf der Aufgabe, mit einfachen Mitteln Vorrichtungen zu schaffen, mit denen der Schaltzustand und die Funktionsfähigkeit der Ventile überprüfbar ist. Dies ergibt die Möglichkeit, dem Fahrer bei Ausfall eines Ventils ein entsprechendes Warnsignal zu geben.

Eine Lösung besteht darin, den Rückstellraum über ein Zuschaltventil an die Druckmittelquelle und einen Drucksensor an den Rückstellraum anzuschließen. Ein Überprüfungszyklus sieht vor, daß von einer Steuereinheit zunächst die Umschaltventile SO in der Leitung zum Ausgleichsbehälter geschlossen werden und eine Verbindung zur Druckmittelquelle hergestellt wird. Dies hat zur Folge, daß ein Druckaufbau im Rückstellraum erfolgt, der vom Drucksensor festgestellt wird. Wird nun von der Steuereinheit die Verbindung zur Druckmittelquelle wieder gesperrt und die Umschaltventile SO wieder geöffnet, so erfolgt ein Druckabbau, der ebenfalls vom Drucksensor festgestellt wird. Druckauf- und -abbau während des Überprüfungszyklus' können nun dahingehend interpretiert werden, daß die Umschaltventile SO in ihrer Offenstellung und funktiontüchtig sind.

Die Druckmittelzuführung zum Rückstellraum für einen Prüfzyklus kann gemäß eines weiteren Erfindungsvorschlages auf zwei Wegen erfolgen. Die eine Möglichkeit besteht darin, daß in der Druckmittelverbindung vom Verstärkerraum zum Umschaltventil SG ein Rückschlagventil geschaltet ist, das zum Verstärkerraum hin sperrt, und daß in der Druckmittelverbindung zwischen dem Rückschlagventil und dem Umschaltventil SG eine Druckleitung zur Druckmittelquelle einmündet, wobei in die Druckmittelleitung ein Zuschaltventil eingesetzt ist. Die andere Möglichkeit sieht vor, daß eine zusätzliche Druckmittelverbindung des Rückstellraums zur Druckmittelquelle existiert, in der ein Zuschaltventil eingesetzt ist.

Falls zwei parallel geschaltete Umschaltventile SO vorgesehen sind, können diese auch nacheinander überprüft werden, wodurch feststellbar ist, welches der parallel geschalteten, ggf. Ventile defekt ist.

Dazu werden zunächst beide Ventile geschlossen und ein Druckaufbau im Rückstellraum hervorgerufen. Nun wird nur das zu überprüfende Ventil geöffnet und festgestellt, ob ein Druckabbau erfolgt.

Eine andere Lösung besteht darin, in den Parallelzweigen der Leitung zum Ausgleichsbehälter Durchflußsensoren vorzusehen. Der Prüfzyklus sieht vor, einen Druckmittelstrom von der Druckmittelquelle zum Ausgleichsbehälter zu provozieren. Dieser Druckmittelstrom wird von den Durchflußsensoren registriert, aber nur dann, wenn die Umschaltventile SO in ihren Offenstellungen sind.

Diese Version läßt nicht die Überprüfung der Funktionsfähigkeit der Ventile zu, d.h. es kann nicht festgestellt werden, ob die Ventile in der Lage sind zu schließen.

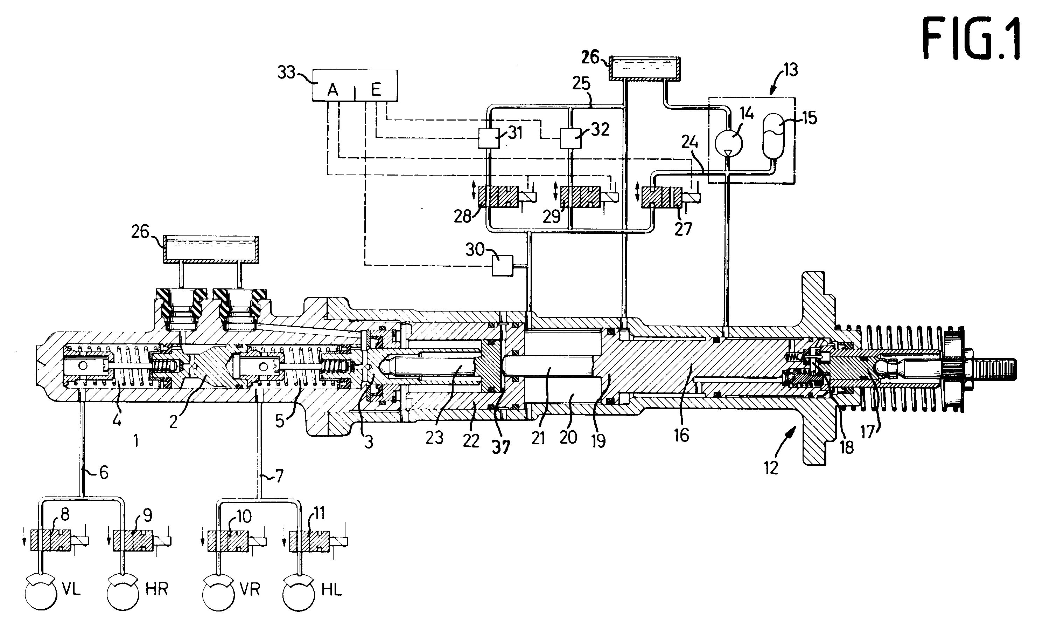

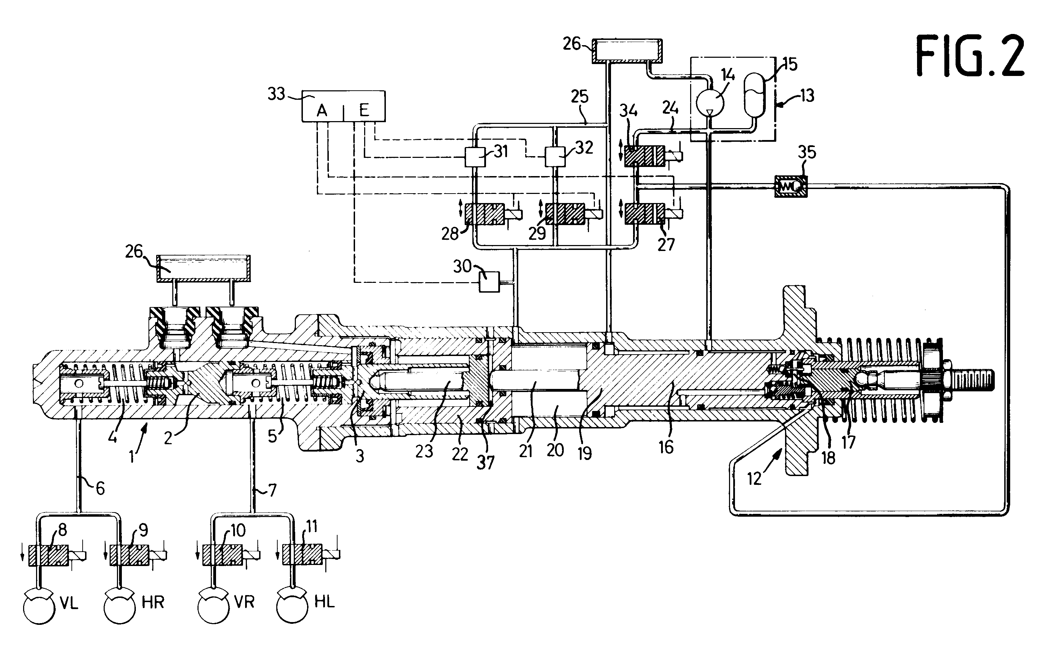

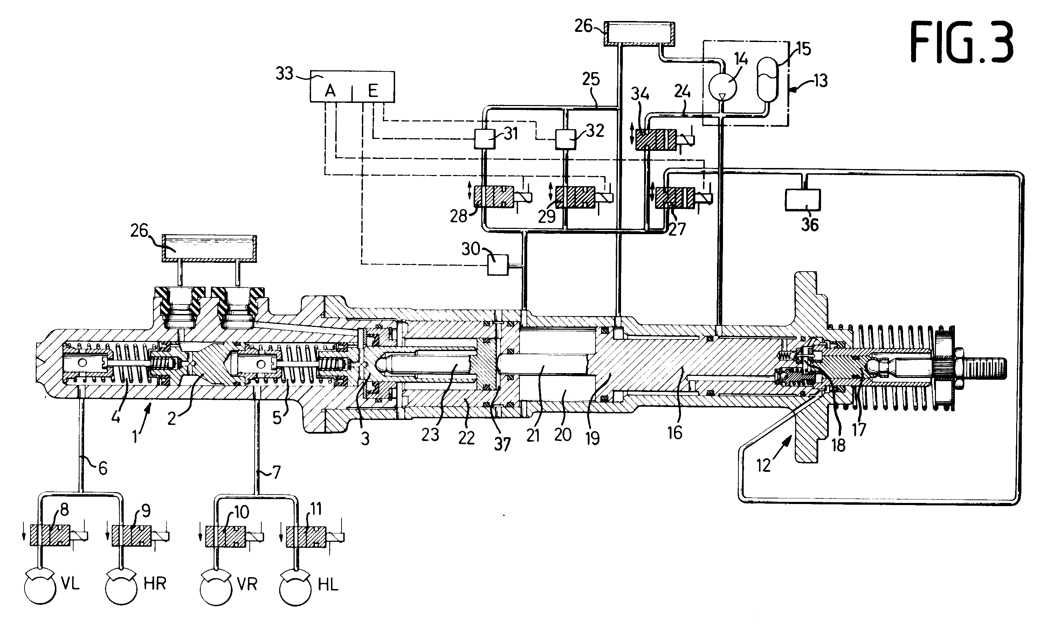

Die Erfindung läßt verschiedene Schaltungsmöglichkeiten zu, die beispielhaft in den Figuren 2 und 3 dargelegt sind. Die Fig. 1 zeigt die Anpassung der Erfindungsidee an ein System, bei dem der Rückstellraum während einer Bremsschlupfregelung unmittelbar an die Druckmittelquelle angeschlossen ist. In den Figuren sind jeweils beide Überprüfungsmöglichkeiten, also mittels eines Drucksensors bzw. mittels Durchflußsensoren dargestellt. Die gemeinsame Darstellung wurde aus Vereinfachungsgründen gewählt; tatsächlich kann mit jeder Lösungsmöglichkeit für sich allein eine Überwachung der Ventile erreicht werden.

Die Figuren zeigen einen Längsschnitt durch einen Hauptzylinder und einen vorgeschalteten Verstärker sowie schematisch die angeschlossenen Bauelemente. Die Figuren unterscheiden sich in den hydraulischen Schaltungen, wobei in der

Fig. 1    der Rückstellraum 20 über das Ventil 27 unmittelbar an die Druckmittelquelle 13 angeschlossen ist. In der

Fig. 2    steht der Rückstellraum 20 über das Ventil 27 und einem Rückschlagventil 35 mit dem Verstärkerraum 18 in Verbindung. Zum Einleiten des Prüfzyklus' wird die Druckmittelquelle 13 mittels des Ventils 34 zugeschaltet, wobei die Druckmittelleitung 24 in die Leitung zwischen dem Ventil 27 und dem Rückschlagventil 35 einmündet. Schließlich ist in der

Fig. 3    im Unterschied zu der Fig. 2 die Druckmittelquelle über das Ventil 34 unmittelbar an den Rückstellraum 20 angebunden. Zur Druckbeaufschlagung des Rückstellraums 20 wird das Ventil 34 geöffnet.

Fig. 4    zeigt mittels eines Flußdiagramms den prinzipiellen Ablauf eines Prüfzyklus'.

In der Ausführungsform nach Fig. 1 wird der Rückstellraum (20) während einer Bremsschlupfregelung unmittelbar vom Druck aus der Druckmittelquelle beaufschlagt, während in den Figuren 2 und 3 dargestellt ist, daß zur Rückstellung des Verstärkerkolbens während einer Bremsschlupfregelung die Verbindung zwischen dem Rückstellraum 20 und dem Verstärkerraum 18 hergestellt ist. Da der Prüfzyklus bei nicht betätigter Bremse eingeleitet wird, steht in dem Verstärkerraum 18 kein Druck zur Verfügung, so daß zur Einleitung des Prüfzyklus' die Druckmittelquelle 13 zugeschaltet werden muß.

Dies geschieht mit Hilfe des Ventils 34, das entweder eine direkte Druckmittelverbindung zum Rückstellraum 20 herstellt (Fig. 3) oder aber die Druckmittelquelle 13 anstelle des Verstärkerraums 18 an das Ventil 27 anschließt, wobei eine Rückwirkung auf den Verstärkerraum 18 durch das Rückschlagventil 35 vermieden wird.

Der Hauptbremszylinder 1 weist zwei in einer Bohrung geführte Kolben 2,3 auf. Der Schwimmkolben 2 begrenzt einen Arbeitsraum 4 und der Druckstangenkolben 3 einen weiteren Arbeitsraum 5. Der Arbeitsraum 4 ist über eine Druckmittelleitung 6 an die Radbremsen vorne links VL und hinten rechts HR angeschlossen. Der Arbeitsraum 5 ist über eine Druckmittelleitung 7 an die Radbremsen vorne rechts VR und hinten links HL angeschlossen. Den Radbremszylindern sind 2/2-Wegeventile 8,9,10,11 zugeordnet, die elektromagnetisch angesteuert sind. Dem Hauptbremszylinder 1 ist ein Verstärker 12 vorgeschaltet, der von einer Druckmittelquelle 13 versorgt wird. Die Druckmittelquelle 13 besteht im wesentlichen aus einer Pumpe 14 und einem Speicher 15.

Der Verstärker weist einen Verstärkerkolben 16 auf, der Steuerventile beinhaltet, die vom Steuerkolben 17 betätigt werden. Mit den Ventilen läßt sich die Verbindung des Verstärkerraums 18 mit der Druckmittelquelle 13 und dem Ausgleichsbehälter 26 so beeinflussen, daß ein bestimmter, im allgemeinen ein fußkraftproportionaler Druck Druck im Verstärkerraum 18 aufgebaut wird.

Der Verstärkerkolben 16 geht über in einen Rückstellkolben 19, der mit seiner vom Steuerkolben 17 abgewandten Stirnfläche den Rückstellraum 20 begrenzt. An die Stirnfläche des Rückstellkolbens schließt sich ein Stößel 21 an, der druckmitteldicht durch eine Wand 22 geführt ist und über einen Zwischenkolben 23 auf den Druckstangenkolben 3 einwirkt.

Der Rückstellraum 20 ist über eine Druckmittelleitung 24 an die Druckmittelquelle 13 oder an den Verstärkerraum 18 angeschlossen und über eine Druckmittelleitung 25 an den Ausgleichsbehälter 26.

In die Druckmittelleitung 24 ist ein Umschaltventil SG 27 geschaltet, das normalerweise geschlossen ist.

In die Druckmittelleitung 25 zum Ausgleichsbehälter 26 sind zwei Umschaltventile SO 28,29 parallel geschaltet, die normalerweise offen sind.

Zur Überwachung der Ventile kann entweder ein Druckschalter 30 vorgesehen werden, der an den Rückstellraum anschließt oder aber Durchflußsensoren 31,32, die in den Parallelzweigen der Leitung 25 angeordnet sind.

Die Sensoren 31,32 sind über nicht näher bezifferte Signalleitungen an den Eingang E einer Steuereinheit 33 angeschlossen.

Die Ventile 27,28,29 sind über nicht näher bezifferte Steuerleitungen an den Ausgang A der Steuereinheit 33 angeschlossen.

Die Bremsanlage arbeitet wie folgt: Durch Betätigen des Steuerkolbens 17 wird Druckmittel aus der Druckmittelquelle 13 in den Verstärkerraum 18 eingesteuert. Der Verstärkerdruck entwickelt sich proportional zur Betätigungskraft. Durch den sich aufbauenden Druck im Verstärkerraum 18 wird der Verstärkerkolben 16 verschoben. Diese Bewegung überträgt sich mittels des Stößels 21 und des Zwischenkolbens 23 auf den Druckstangenkolben 3 des Hauptzylinders 1. Das Druckmittel im Arbeitsraum 5 wird komprimiert, so daß eine entsprechende Bewegung des Schwimmkolbens 2 folgt, bis sich ein Druckgleichgewicht zwischen den Arbeitsräumen (4,5) einstellt. Der Druck in den Arbeitsräumen wird über die Bremsleitungen 6,7 zu den Radbremsen übertragen.

Wird nun von nicht dargestellten Sensoren festgestellt, daß eines der Räder droht zu blockieren, so werden zunächst die 2/2-Wegeventile der anderen Räder in ihre Schließstellung geschaltet.

In einem weiteren Schritt werden die Umschaltventile 27,28,29 umgeschaltet, so daß nun der Rückstellraum 20 an die Druckmittelquelle angeschlossen ist. Da der Rückstellkolben 19 einen größeren Durchmesser hat als der Verstärkerkolben 16, erfolgt eine Rückstellung des Verstärkerkolbens 16. Der Druckstangenkolben 3 wird nicht länger belastet, so daß eine Druckentspannung in den Arbeitsräumen 4,5 folgt, die auf den Radzylinder des blockierenden Rades übertragen wird. Der Druck in den übrigen Radzylindern bleibt konstant, da die entsprechenden 2/2-Wegeventile in ihren Schließstellungen sind. Da das blockierende Rad keine Bremskräfte mehr erfährt, wird es beschleunigt und aus der Blockiergefahr herauslaufen.

Eine erneute Druckbeaufschlagung des Hauptbremszylinders kann nun entweder dadurch erfolgen, daß Druckmittel aus dem Rückstellraum 20 abgelassen wird, oder aber bei rückgestelltem Verstärkerkolben 16 Druckmittel in den Modulationsraum 37, der den Zwischenkolben 23 begrenzt, eingesteuert wird. Die dazu notwendigen Ventile und Steuereinrichtungen sind in den Figuren nicht dargestellt, da diese nicht Teil der Erfindung sind.

Sobald der Regelvorgang abgeschlossen ist, werden die Umschalventile 27,28,29 in ihre ursprüngliche Stellung geschaltet. Bei erneuter Betätigung des Verstärkerkolbens 16 wird der Rückstellraum 20 verkleinert und Druckmittel wird aus dem Rückstellraum 20 in den Ausgleichsbehälter 26 fließen.

Da es für das Funktionieren der Bremse unumgänglich ist, daß der Verstärkerkolben 16 verschoben werden kann, muß garantiert sein, daß die Umschaltventile 28,29 oder zumindestens eines von ihnen in seiner Offenstellung ist, da ansonsten das Druckmittel nicht aus dem Rückstellraum verdrängt werden kann. Da bei Ventilen stets die Gefahr besteht, daß der Schließkörper klemmt und so das Ventil in seiner Schließstellung bleibt, obwohl das Ansteuerungssignal es in die Offenstellung schalten soll, ist es sinnvoll, einen Überprüfungsmechanismus vorzusehen, so daß rechtzeitig ein Warnsignal gegeben werden kann.

Eine erste Lösung sieht vor, einen Druckschalter 30 vorzusehen, der den Druck im Rückstellraum 20 registriert. Von der Steuereinheit 33 wird ein Regelzyklus ausgelöst, wobei zunächst die Ventile 28,29 in ihre Schließstellungen geschaltet werden und anschließend das Ventil 27 geöffnet wird (Fig. 1).

Gemäß der Fig. 2 wird zusätzlich das Ventil 34 umgeschaltet, so daß bei offenen Ventilen 27 und 34 eine Druckmittelverbindung zwischen der Druckquelle 13 und dem Rückstellraum 20 besteht. Gemäß der Fig. 3 wird das Ventil 34 geöffnet und das Ventil 27 bleibt in seiner Schließstellung.

Daraufhin wird der Speicherdruck im Rückstellraum 20 aufgebaut, der vom Drucksensor 30 registriert wird. Werden nun die Ventile wieder in ihre Ursprungsstellungen geschaltet, so erfolgt ein Druckabbau, da eine Entspannung des Druckmittels im Rückstellraum 20 zum Ausgleichsbehälter 26 erfolgt. Dies kann aber nur dann erfolgen, wenn die Ventile 28, 29 tatsächlich umschalten, so daß der von der Steuereinheit registrierte Druckauf- und Druckabbau im Rücktellraum 20 während des Überprüfungszyklus' dahingehend interpretiert werden kann, daß die Ventile 28, 29 in ihren Offenstellungen sind. Um feststellen zu können, welches der Ventile nicht in seine Offenstellung gelangt ist, kann der Überprüfungszyklus auch mehrmals durchgeführt werden, wobei jeweils nur ein Umschaltventil SO 27 oder 28 geschaltet wird.

Eine andere Möglichkeit sieht vor, Durchflußsensoren 31,32 in die Parallelleitungen der Leitung 25 zu schalten. Wird das Ventil 27 gemäß der Fig. geöffnet, dann pumpt die Pumpe 14 drucklos in den Ausgleichsbehälter 26. In der anderen Ausführungsform sind entsprechende Ventilschaltungen vorzunehmen. Wenn die Ventile 28,29 geöffnet sind, wird ein entsprechender Durchfluß an den Durchflußsensoren 31,32 festgestellt, der beendet ist, sobald das Ventil 27 wieder in die Schließstellung geschaltet wird. Da ein Durchfluß nur dann möglich ist, wenn die Ventile 28,29 offen sind, kann der registrierte Durchfluß dahingehend interpretiert werden, daß diese Ventile in ihren Offenstellungen sind.

Sollte die Steuereinheit 33 keine Signale von den Sensoren 31,32 erhalten, die entsprechend der Offenstellung der Ventile (28,29) zu erwarten sind, so kann ein Warnsignal ausgelöst werden, das den Fahrer über die Situation informiert.

Wie in der Fig. 3 dargestellt, kann mittels eines Drucksensors 36 der Druck im Verstärkerraum 18 überprüft werden. Sollte während eines Prüfzyklus' die Bremse betätigt werden, so hat dies unmittelbar einen Druckaufbau im Verstärkerraum 18 zur Folge, der vom Drucksensor 36 detektiert wird. Der Drucksensor 36 gibt ein Signal an die Steuereinheit 33, die daraufhin den Prüfzyklus sofort unterbricht, so daß der Rückstellraum 20 drucklos wird, und der Verstärkerkolben 16 widerstandsfrei verschoben werden kann; diese Maßnahme kann natürlich auch bei den anderen Ausführungsbeispielen vorgesehen werden.

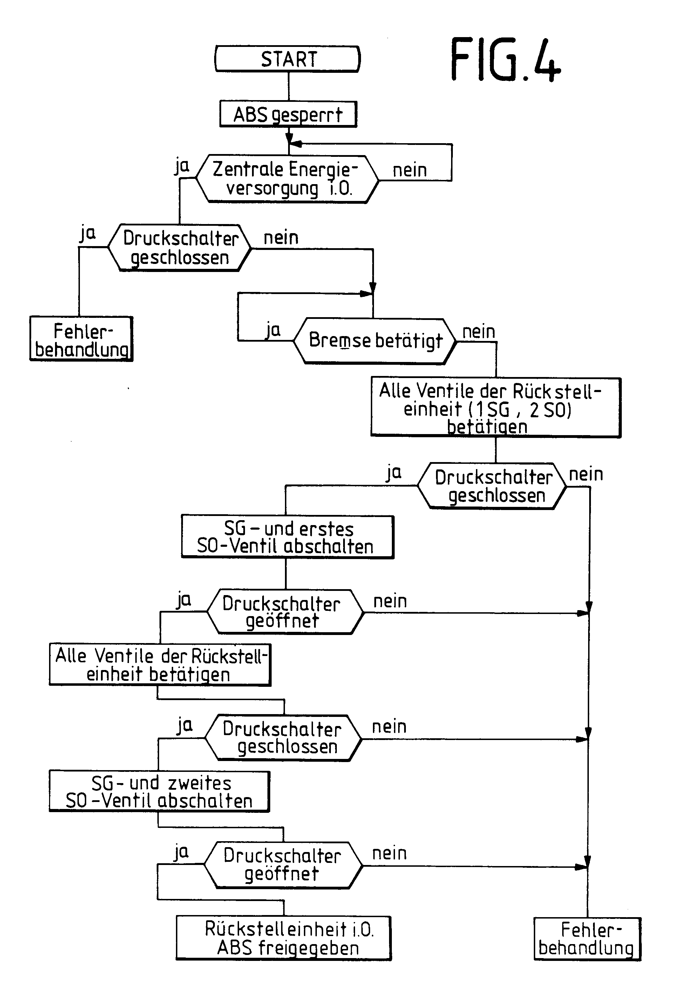

Die Wirkungsweise der Prüfschaltung für die Ausführungsart nach Fig. 1 wird aus dem in Fig. 4 wiedergegebenen Flußdiagramm ersichtlich.

Der Prüfzyklus nach Fig. 4 kann leicht den anderen Ausführungsformen angepaßt werden. In dem Diagramm wird der Drucksensor 30 als Druckschalter angesprochen: Offener Druckschalter bedeutet, daß kein Druck vorhanden ist.

Der Prüfzyklus wird beim Anlassen des Fahrzeug-Motors oder beim Eintritt einer anderen relative häufig auftretenden Bedingung oder in regelmäßigen Zeitabständen gestartet (START). Die Blockierschutzregelung wird gesperrt (ABS gesperrt). Ist Hilfsdruck vorhanden (Zentrale Energieversorgung i.O.) und der Druckschalter 30 offen (Druckschalter geschlossen: nein) und wird zu diesem Zeitpunkt die Bremse nicht betätigt (Bremse betätigt: nein) werden alle Ventile, die zum Rückstellraum gehören, erregt und damit umgeschaltet. Dies hat, wenn die Rückstelleinheit in Ordnung ist, einen Druckaufbau im Rückstellraum 20 und eine Betätigung des Druckmeßelementes bzw. Druckschalters 30 zur Folge (Druckschalter geschlossen: ja). Danach werden durch die Prüfschaltung eines der den Druckmittelweg zu dem Behälter 26 hin öffnenden Ventile 28 oder 29 und Ventil 29 durch Beendigung des Ansteuersignales zurückgeschaltet (SG- und erstes SO-Ventil abschalten). Dies hat einen Druckabbau im Rückstellraum 20 und dadurch ein Öffnen des Druckschalters 30 (Druckschalter geöffnet: ja) zur Folge. Anschließend werden wiederum alle umschaltbaren Ventile 28,29 und 27 der Rückstelleinheit betätigt (Alle Ventile der Rückstelleinheit betätigen), und es wird festgestellt, ob der Druckschalter 30 wieder ordnungsgemäß schließt (Druckschalter geschlossen: ja). Nunmehr muß nur noch das zweite Ventil, das zum Druckausgleichsbehälter 26 führt und das Druckeinsteuerventil 27 zurückgeschaltet werden (SG- und zweites SO-Ventil abschalten). Führt auch dies zum Öffnen des Druckschalters (Druckschalter geöffnet: ja) ist der Prüfzyklus beendet, weil festgestellt wurde, das die Rückstelleinheit in Ordnung ist (Rückstelleinheit i.O.) die Blockierschutzregelung kann nun freigegeben werden.

Aus dem Diagramm geht außerdem hervor, daß ein Abweichen von dem beschriebenen Signalverlauf auf einen Defekt oder eine Fehlfunktion hinweist, die signalisiert werden muß.

Der beschriebene Prüfzyklus läßt sich durch logische Verknüpfung mit Hilfe einer festverdrahteten Schaltung oder durch ein entsprechendes Programm realisieren, wenn die Steuereinheit 33 programmgesteuerte Schaltkreise, wie Mikrocomputer, enthält.

Bezugszeichenliste

| 1 | Hauptbremszylinder |
|---|---|
| 2 | Schwimmkolben |
| 3 | Druckstangenkolben |
| 4 | Arbeitsraum |
| 5 | Arbeitsraum |
| 6 | Bremsleitung |
| 7 | Bremsleitung |
| 8 | 2/2-Wegeventil |
| 9 | 2/2-Wegeventil |
| 10 | 2/2-Wegeventil |
| 11 | 2/2-Wegeventil |
| 12 | Kraftverstärker |
| 13 | Druckmittelquelle |
| 14 | Pumpe |
| 15 | Speicher |
| 16 | Verstärkerkolben |
| 17 | Steuerkolben |
| 18 | Verstärkerraum |
| 19 | Rückstellkolben |
| 20 | Rückstellraum |
| 21 | Stößel |
| 22 | Wand |
| 23 | Zwischenkolben |
| 24 | Leitung |
| 25 | Leitung |
| 26 | Ausgleichsbehälter |
| 27 | Umschaltventil SG |
| 28 | Umschaltventil SO |
| 29 | Umschaltventil SO |
| 30 | Drucksensor |
| 31 | Durchflußsensor |
| 32 | Durchflußsensor |
| 33 | Steuereinheit |
| 34 | Zuschaltventil |
| 35 | Rückschlagventil |
| 36 | Drucksensor |
| 37 | Modulationsraum |
| VL | Radbremse vorne links |
| VR | Radbremse vorne rechts |
| HL | Radbremse hinten links |
| HR | Radbremse hinten rechts |
| A | Ausgang |
| E | Eingang |

**Patentansprüche**

1. Blockiergeschützte hydraulische Bremsanlage für ein Kraftfahrzeug mit einem Hauptbremszylinder (1), an dem über ein oder mehrere Bremsleitungen (6,7) Radbremszylinder angeschlossen sind, mit einem, von einer Druckmittelquelle (13) gespeisten pedalbetätigten Kraftverstärker (12), der dem Hauptbremszylinder (1) vorgeschaltet ist und der einen Verstärkerkolben (16) aufweist, dessen eine Stirnseite einen Rückstellraum (20) und dessen andere Stirnseite einen Verstärkerraum (18) begrenzt, wobei der Rückstellraum (20) über ein normalerweise geschlossenes Umschaltventil SG (27) an den Verstärkerraum (18) und über ein oder mehreren parallel geschalteten, normalerweise offenen Umschaltventilen SO (28,29) an einen drucklosen Ausgleichsbehälter (26) angeschlossen ist, dadurch **gekennzeichnet,** daß der Rückstellraum (20) unmittelbar an die Druckmittelquelle über ein Zuschaltventil (34) anschließbar ist, daß die Bremsanlage mit einem, an den Rückstellraum (20) angeschlossenen Drucksensor (30) und einer Prüfschaltung ausgerüstet ist, die zu vorgegebenen Zeitpunkten einen Prüfzyklus (Fig. 4) auslöst, der im wesentlichen darin besteht, daß den Umschaltventilen SO (28,29) Schaltsignale zugeführt werden, daß die tatsächlichen Signale des Drucksensors (30) mit den bei intakter Anlage zu erwartenden verglichen werden, und daß bei Gleichheit von tatsächlichen und zu erwartenden Signalen dies als Funktionsfähigkeit des Systems, insbesondere der Funktionsfähigkeit der an den Rückstellraum angeschlossenen Ventilen (28,29) interpretiert wird.

2. Blockiergeschützte hydraulische Bremsanlage für ein Kraftfahrzeug mit einem Hauptbremszylinder (1), an dem über ein oder mehrere Bremsleitungen (6,7) Radbremszylinder angeschlossen sind, mit einem, von einer Druckmittelquelle (13) gespeisten pedalbetätigten Kraftverstärker (12), der dem Hauptbremszylinder (1) vorgeschaltet ist, und der einen Verstärkerkolben (16) aufweist, dessen eine Stirnseite einen Rückstellraum (20) und dessen andere Stirnseite einen Verstärkerraum (18) begrenzt, wobei der Rückstellraum (20) über ein normalerweise geschlossenes Umschaltventil SG (27) an den Verstärkerraum (18) und über ein oder mehreren parallel geschalteten, normalerweise offenen Umschaltventilen SO (28,29) an einen drucklosen Ausgleichsbehälter (26) angeschlossen ist, dadurch **gekennzeichnet,** daß den Umschaltventilen SO (28,29) Durchflußsensoren (31,32) zugeordnet sind und daß die Bremsanlage mit einer Prüfschaltung ausgerüstet ist, die zu vorgegebenen Zeitpunkten einen Prüfzyklus auslöst, der darin besteht, daß Druckmittel durch die Umschaltventile SO (28,29) geleitet wird, wobei ein von den Durchflußsensoren festgestellter Durchfluß dahingehend interpretiert wird, daß das jeweils zugeordnete Umschaltventil (28,29) in seiner Offenposition ist.

3. Bremsanlage nach Anspruch 1 oder 2, dadurch **gekennzeichnet,** daß in der Druckmittelverbindung vom Verstärkerraum (18) zum Umschaltventil SG (27) ein Rückschlagventil (35) geschaltet ist, das zum Verstärkerraum (18) hin sperrt, und daß in der Druckmittelverbindung zwischen dem Rückschlagventil (35) und dem Umschaltventil SG (27) eine Druckleitung (24) zur Druckmittelquelle (13) einmündet, wobei in die Druckmittelleitung (24) ein Zuschaltventil (34) eingesetzt ist.

4. Bremsanlage nach Anspruch 4, dadurch **gekennzeichnet,** daß eine zusätzliche Druckmittelverbindung des Rückstellraums (20) zur Druckmittelquelle (13) existiert, in der ein Zuschaltventil (34) eingesetzt ist.

5. Bremsanlage nach Anspruch 1 oder 2, dadurch **gekennzeichnet,** daß der Prüfzyklus bei jedem Anlassen des Fahrzeugmotors auslösbar ist.

6. Bremsanlage nach Anspruch 5, dadurch **gekennzeichnet,** daß bei jedem Anlassen des Fahrzeugmotors und nicht betätigter Bremse der Prüfzyklus auslösbar ist.

7. Bremsanlage nach Anspruch 1 oder 2, dadurch **gekennzeichnet,** daß der Prüfzyklus in vorgegebenen Zeitabständen bei nicht betätigter Bremse auslösbar ist.

8. Bremsanlage nach Anspruch 6 oder 7, dadurch **gekennzeichnet,** daß an den Verstärkerraum (18) ein Druckschalter (36) angeschlossen ist.

9. Bremsanlage nach Anspruch 1, dadurch **gekennzeichnet,** daß als Drucksensor ein durch Druck betätigbarer elektrischer Schalter vorgesehen ist, dessen Schaltstellung logisch mit der Schaltstellung der Ventile (27,28,29,34) verknüpfbar ist.

10. Bremsanlage nach Anspruch 1 oder 2, dadurch **gekennzeichnet,** daß mindestens zwei Umschaltventile (28,29) vorgesehen sind, wobei nach erfolgtem Druckaufbau im Rückstellraum jeweils nur ein Ventil in die Offenposition geschaltet wird.

**Claims**

1. An anti-lock hydraulic brake system for an automotive vehicle with a master brake cylinder (1) to which via one or more brake lines (6, 7) wheel brake cylinders are connected, with a pedal-operated power booster (12) fed by a pressure fluid source (13) and inserted upstream of the master brake cylinder (1) as well as comprising a booster piston (16) whose one end face confines a resetting chamber (20) and whose other end face confines a booster chamber (18), with the resetting chamber (20) communicating with the booster chamber (18) via a normally closed change-over valve SG (27) and communicating with an unpressurized compensating reservoir (26) via one or more parallel connected, normally open change-over valves SO (28, 29),
   **characterized** in that the resetting chamber (20) is directly connectible to the pressure fluid source via a connecting valve (34), in that the brake system is equipped with a pressure sensor (30) that is connected to the resetting chamber (20) as well as with a test circuit which, at predetermined points of time, initiates a test cycle (Fig. 4) which substantially consists in that the change-over valves SO (28, 29) are supplied with switching signals, in that the actual signals of the pressure sensor (30) are compared with those to be expected when the system is intact, and in that in the event of equality of actual signals and those to be expected this is interpreted as operability of the system, in particular as operability of the valves (28, 29) connected to the resetting chamber.

2. An anti-lock hydraulic brake system for an automotive vehicle with a master brake cylinder (1) to which via one or more brake lines (6, 7) wheel brake cylinders are connected, with a pedal-operated power booster (12) fed by a pressure fluid source (13) and inserted upstream of the master brake cylinder (1) as well as comprising a booster piston (16) whose one end face confines a resetting chamber (20) and whose other end face confines a booster chamber (18), with the resetting chamber (20) communicating with the booster chamber (18) via a normally closed change-over valve SG (27) and communicating with an unpressurized compensating reservoir (26) via one or more parallel connected, normally open change-over valves SO (28, 29),
   **characterized** in that allocated to the change-over valves SO (28, 29) are flow sensors (31, 32), and in that the brake system is equipped with a test circuit which, at predetermined points of time, initiates a test cycle which consists in that pressure fluid is delivered through the change-over valves SO (28, 29), with fluid flow registered by the flow sensors being interpreted as an indication that the respectively allocated change-over valve (28, 29) is in its opened position.

3. A brake system as claimed in claim 1 or 2, **characterized** in that inserted into the pressure fluid connection from the booster chamber (18) to the change-over valve SG (27) is a non-return valve (35) closing towards the booster chamber (18), and in that terminating into the pressure fluid connection between the non-return valve (35) and the change-over valve SG (27) is a pressure line (24) to the pressure fluid source (13), while a connecting valve (34) is inserted into the pressure fluid line (24).

4. A brake system as claimed in claim 4, **characterized** in that there is an additional pressure fluid connection between the resetting chamber (20) and the pressure fluid source (13), in which a connecting valve (34) is arranged.

5. A brake system as claimed in claim 1 or 2, **characterized** in that the test cycle can be initiated upon every start of the vehicle engine.

6. A brake system as claimed in claim 5, **characterized** in that the test cycle can be initiated upon every start of the vehicle engine and with the brake not being applied.

7. A brake system as claimed in claim 1 or 2, **characterized** in that the test cycle can be initiated in predetermined intervals and with the brake not being applied.

8. A brake system as claimed in claim 6 or 7, **characterized** in that a pressure switch (36) is connected to the booster chamber (18).

9. A brake system as claimed in claim 1, **characterized** in that, as a pressure sensor, a pressure-operable electric switch is provided whose switch position is logically combinable with the switch position of the valves (27, 28, 29, 34).

10. A brake system as claimed in claim 1 or 2, **characterized** in that there is provision of at least two change-over valves (28, 29), while in each case only one valve is switched into the opened position after pressure build-up took place in the resetting chamber.

## Revendications

1. Installation de freinage hydraulique à antiblocage pour un véhicule automobile, comportant un maître-cylindre de frein (1) auquel sont raccordés des cylindres de frein de roue par l'intermédiaire d'une ou plusieurs conduites de frein (6,7), et un amplificateur de force (12) actionné par pédale et alimenté par une source de fluide sous pression (13), qui est monté en amont du maître-cylindre (1) et présente un piston amplificateur (16) dont un côté frontal délimite une chambre de rappel (20) et dont l'autre côté frontal délimite une chambre d'amplification (18), la chambre de rappel (20) étant reliée à la chambre d'amplification (18) par l'intermédiaire d'une soupape de commutation SG (27) normalement fermée, et à un réservoir de compensation sans pression (26) par l'intermédiaire d'une ou plusieurs soupapes de commutation so (28,29) normalement ouvertes, montées en parallèle, **caractérisée** en ce que la chambre de rappel (20) peut être directement reliée à la source de fluide sous pression par l'intermédiaire d'une soupape de mise en circuit (34), en ce que l'installation de freine est équipée d'un détecteur de pression (30) raccordé à la chambre de rappel (20), et d'un montage de contrôle qui déclenche, à des instants prédéterminés, un cycle de contrôle (figure 4) qui consiste pour l'essentiel en ce que des signaux de commutation sont transmis aux soupapes de commutation so (28,29), en ce que les signaux effectifs du détecteur de pression (30) sont comparés aux signaux attendus d'une installation intacte, et en ce que l'identité entre les signaux effectifs et les signaux attendus est interprétée comme indiquant le bon fonctionnement du système, notamment le bon fonctionnement des soupapes (28,29) reliées à la chambre de rappel.

2. Installation de freinage hydraulique à antiblocage pour un véhicule automobile, comportant un maître-cylindre de frein (1) auquel sont raccordés des cylindres de frein de roue par l'intermédiaire d'une ou plusieurs conduites de frein (6,7), et un amplificateur de force (12) actionné par pédale et alimenté par une source de fluide sous pression (13), qui est monté en mont du maître-cylindre (1) et qui présente un piston amplificateur (16) dont un côté frontal délimite une chambre de rappel (20) et dont l'autre côté frontal délimite une chambre d'amplification (18), la chambre de rappel (20) étant reliée à la chambre d'amplification (18) par l'intermédiaire d'une soupape de commutation SG (27) normalement fermée, et à un réservoir de compensation sans pression (26) par l'intermédiaire d'une ou plusieurs soupapes de commutation so (28,29) normalement ouvertes, montées en parallèle, **caractérisée** en ce que des détecteurs d'écoulement (31,32) sont associés aux soupapes de commutation SO (28,29), et en ce que l'installation de freinage est équipée d'un montage de contrôle qui déclenche, à des instants prédéterminés, un cycle de contrôle qui consiste à faire passer du fluide sous pression par les soupapes de commutation SO (28,29), un écoulement constaté par les détecteurs d'écoulement étant interprété comme indiquant que la soupape de commutation concernée (28,29) se trouve dans sa position ouverte.

3.  Installation de freinage selon la revendication 1 ou 2, caractérisée en ce qu'un clapet antiretour (35) est monté dans la liaison de fluide sous pression entre la chambre d'amplification (18) et la soupape de conmutation SG (27), clapet qui empêche l'écoulement vers la chambre d"amplification (18), et en ce qu'une conduite de fluide sous pression (24), menant à la source de fluide sous pression (13), débouche dans la liaison de fluide entre le clapet antiretour (35) et la soupape de commutation SG (27), une soupape de mise en circuit (34) étant incorporée dans la conduite (24).

4.  Installation de freinage selon la revendication 3, caractérisée en ce qu'il existe une liaison supplémentaire de fluide sous pression menant de la chambre de rappel (20) à la source de fluide sous pression (13), liaison dans laquelle est montée une soupape de mise en circuit (34).

5.  Installation de freinage selon la revendication 1 ou 2, caractérisée en ce que le cycle de contrôle peut être déclenché à chaque démarrage du moteur du véhicule.

6.  Installation de freinage selon la revendication 5, caractérisée en ce que le cycle de contrôle peut être déclenché à chaque démarrage du moteur du véhicule non accompagné d'un actionnement des freins.

7.  Installation de freinage selon la revendication 1 ou 2, caractérisée en ce que le cycle de contrôle peut être déclenché à des intervalles de temps prédéterminés, en l'absence d'un actionnement des freins.

8.  Installation de freinage selon la revendication 6 ou 7, caractérisée en ce qu'un commutateur de pression (36) est raccordé à la chambre d'amplification (18).

9.  Installation de freinage selon la revendication 1, caractérisée en ce qu'il est prévu comme détecteur de pression un commutateur électrique pouvant être actionné par la pression, dont la position de commutation peut être logiquement liée à la position de commutation des soupapes (27,28,29,34).

10. Installation de freinage selon la revendication 1 ou 2, caractérisée en ce qu'au moins deux soupapes de commutation (28,29) sont prévues, une seule de ces soupapes étant chaque fois commutée en position ouverte une fois la chambre de rappel mise sous pression.

# FIG.1

FIG.2

EP 0 284 718 B1

FIG.3

EP 0 284 718 B1

# FIG.4

START

ABS gesperrt

ja / Zentrale Energie-versorgung i.O. \ nein

ja / Druckschalter geschlossen \ nein

Fehler-behandlung

ja / Bremse betätigt \ nein

Alle Ventile der Rückstell-einheit (1SG , 2 SO) betätigen

ja / Druckschalter geschlossen \ nein

SG – und erstes SO-Ventil abschalten

ja / Druckschalter geöffnet \ nein

Alle Ventile der Rückstell-einheit betätigen

ja / Druckschalter geschlossen \ nein

SG- und zweites SO –Ventil abschalten

ja / Druckschalter geöffnet \ nein

Rückstelleinheit i.O. ABS freigegeben

Fehler-behandlung